# EUROPEAN PATENT SPECIFICATION

(11) **EP 0 704 086 B1**
(45) Date of publication and mention of the grant of the patent: **17.09.1997**
(21) Application number: 94917757.0
(22) Date of filing: 16.06.1994
(51) Int. Cl.: G09F 27/00

(54) **RETAIL DISPLAY APPARATUS**
EINZELHANDELSANZEIGEVORRICHTUNG
APPAREIL DE PRESENTATION POUR DETAILLANT

(30) Priority: 16.06.1993 GB 9312438
(43) Date of publication of application: 03.04.1996
(73) Proprietor: Potter, Billett Genn, Oxford OX4 1JE (GB)
(72) Inventor: Potter, Billett Genn, Oxford OX4 1JE (GB)
(74) Representative: Unwin, Stephen Geoffrey
(86) International application number: GB9401297
(87) International publication number: WO9429839

(56) References cited:
- WO-A-92/02920
- CH-A- 674 778
- DE-U- 8 911 029
- FR-A- 2 228 261
- FR-A- 2 629 244
- US-A- 3 861 792
- US-A- 4 677 570
- US-A- 4 701 627

## Description

### TECHNICAL FIELD

This invention relates to retail display apparatus for simultaneously displaying a pre-recorded visual image and an associated text for advertising products and/or services in, for example, a "shop-window".

### BACKGROUND ART

The vast majority of shop window displays are static display of items for sale and/or of static notices describing and/or illustrating goods or services for sale. Moving displays are sometimes used for successively displaying different items or notices. Electronic textual displays are also known. However, there remains a need for a more flexible system for displaying and advertising a wide range of goods and/or services which is capable of operating in the confined space usually available in a shop window and in high ambient light levels.

US-A-3 861 792 discloses an audio-visual device which is automatically activated when someone reaches for promotional literature housed in a dispenser. The device may comprise a compact motion-picture projector or video casette player with a continuous loop sound film.

US-A-4677570 discloses an information presenting system comprising a CRT for indicating a menu, a motion picture tube and a still picture tube. The system is operated via a keyboard to display motion pictures and still pictures together with an audio presentation depending on the selection made from the menu.

### DISCLOSURE OF INVENTION

According to a first aspect of the invention there is provided retail display apparatus comprising: image display means and text display means arranged to display pre-recorded visual images and associated text, the image display means comprising a projector and a back projection screen; programmable central control means for controlling individually the image displayed by the image display means and the associated text displayed by the text display means; and manually operable remote control means connected to the central control means for enabling interactive operation of the apparatus by a user.

Such retail display apparatus may, for example, be used as a sales aid for estate agents with the central control means being programmed to cause the display means to display successively a number of photographs of available properties, and, whilst each photograph is being displayed to successively display various particulars of each property.

The manually operable remote control unit be interactively operated by a user so they can select the products and/or services they are interested in.

An estate agent may, for example, programme the apparatus with pictures of various properties which are selectively displayed by the central processor in response to a user manipulating the remote control unit in accordance with prompts and/or menus displayed by the text display, such as to select and display only properties falling within the users designated requirements with further information then being given on the text display.

The display means may comprise a slide projector arranged for back projection of slides onto a screen, or may comprise a video projection unit connected to a magnetic tape, compact disc (CD) or electronic memory storing the images.

The display means may include an alphanumeric display device.

The central control unit may comprise a PC or similar small computer, or a central processor may be used with a 'smart card' or other programmable means.

The manually operable remote control unit may conveniently comprise a "touch screen" unit in which signals are generated through a membrane, induction, or a grid reference LED system, connected to the central control unit by cable or by an infra-red transmitter. The remote control unit is preferably operable through a sheet of glass such as a shop window and may be a simple "through-the-glass" keypad.

According to a second aspect of the invention there is provided a method of advertising products or services characterised in that the products or services are illustrated by pre-recorded images displayed by retail display apparatus as claimed in any of the preceding claims such that the display may be interactively and selectively viewed with associated text by potential customers.

Other features of the invention will be apparent from the following description and the subsidiary claims of the specification.

### BRIEF DESCRIPTION OF DRAWINGS

The invention will now be further described, merely by way of example, with reference to the following drawings in which:
Figure 1 is a schematic view of retail display apparatus according to a first embodiment of the invention as seen by a user;
Figure 2 is a perspective view of the apparatus shown in Figure 1;
Figure 3 is a side view of the apparatus shown in Figures 1 and 2;
Figure 4 is a perspective view of retail display apparatus according to a second embodiment of the invention;
Figure 5 is a side view of the apparatus shown in Figure 4;
Figure 6 is a perspective view corresponding to Figure 2 showing the apparatus in use in a shop window;
Figure 7 is a perspective view corresponding to Figure 2 showing the use of a blind;

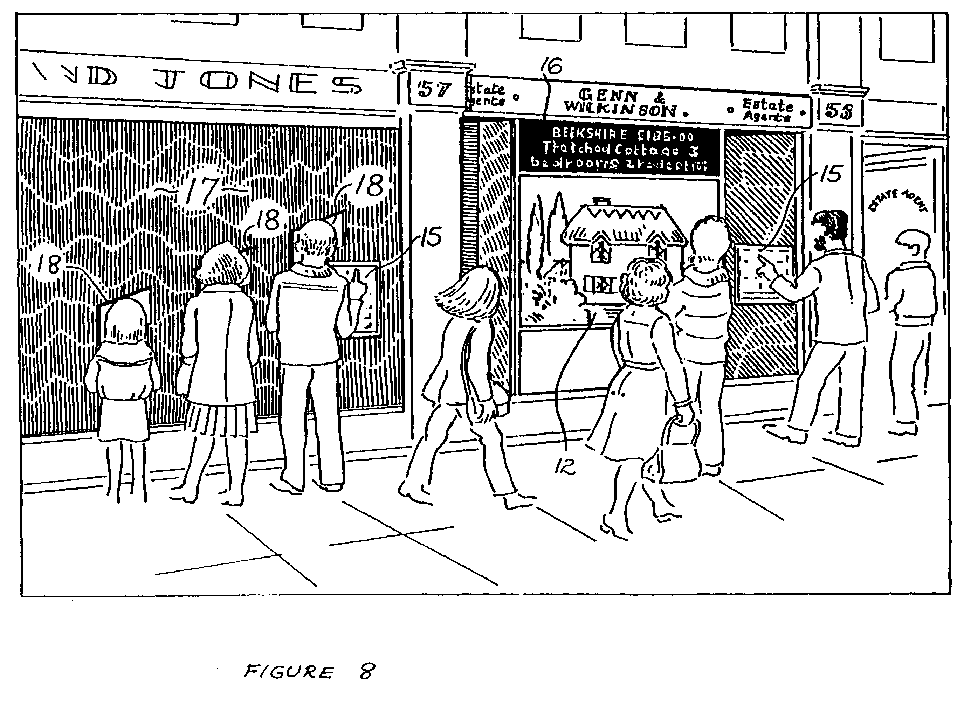

Figure 8 is an illustrative view showing how the apparatus of Figures 1 and 2 could be utilised to provide high street "shop window" displays; and
Figure 9 is a side view of retail display apparatus according to a third embodiment of the invention.

### BEST MODE OF CARRYING OUT THE INVENTION

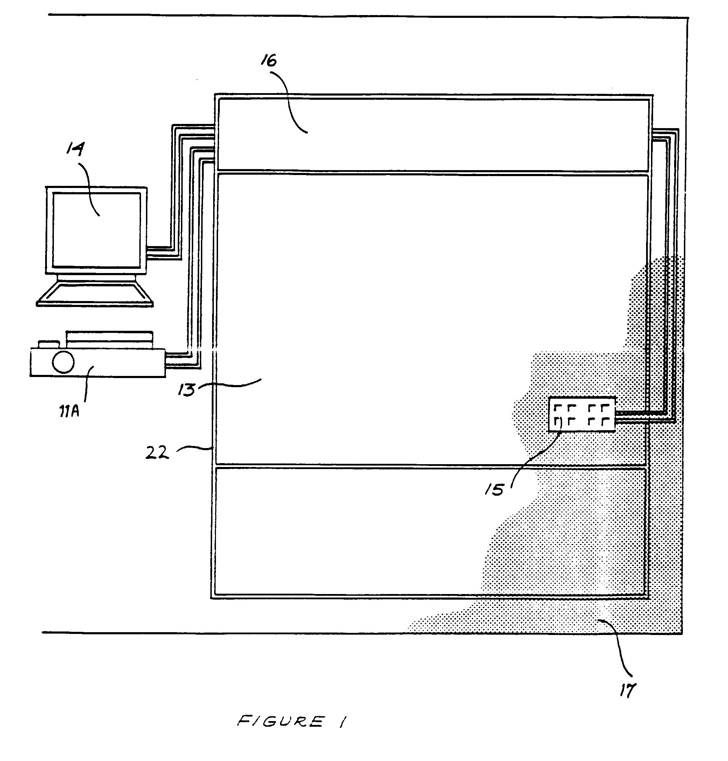

The display apparatus illustrated in Figures 1, 2 and 3 includes a microprocessor controlled slide projector 11A having a magazine loaded with photographic slides showing a selection of properties available for sale.

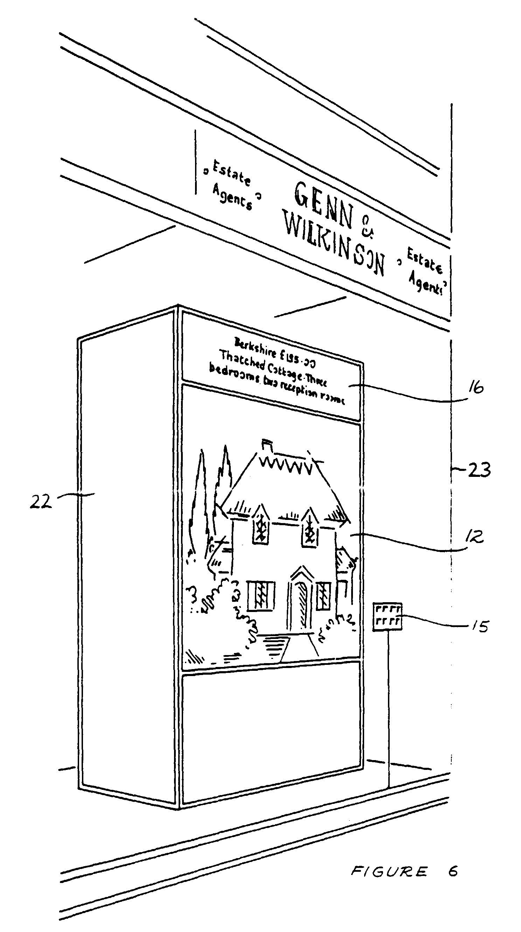

The projector 11A is arranged to project an image of each property (such as 12 in Figure 6) onto a back-projection screen 13.

The projector is connected to a central control unit comprising a small computer 14 which is connected to a manually operable control 15 such as a "through-the-glass" keypad and also to an LED display unit 16.

The apparatus is located within an estate agent's or other shop window with only the manual control 15 being accessible from the street.

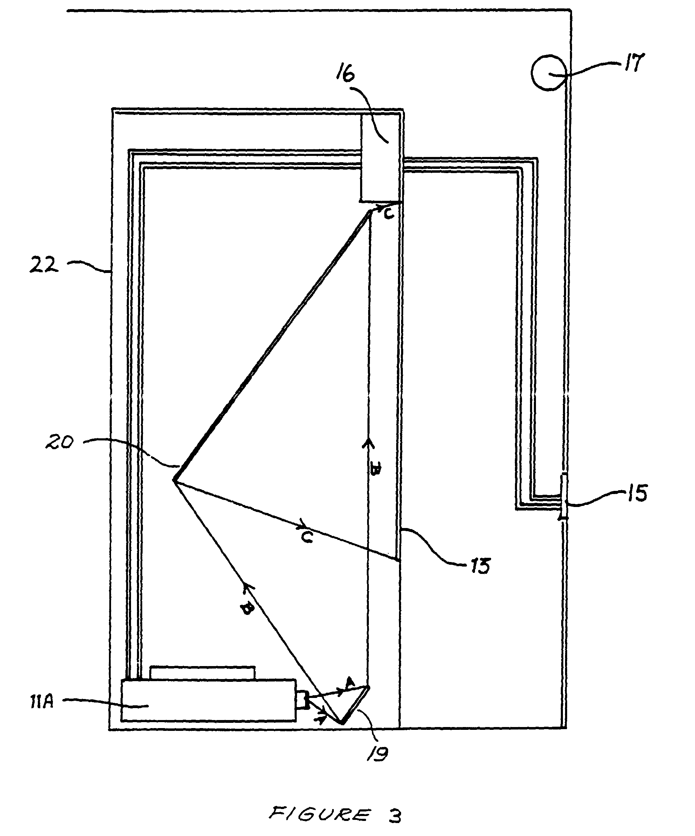

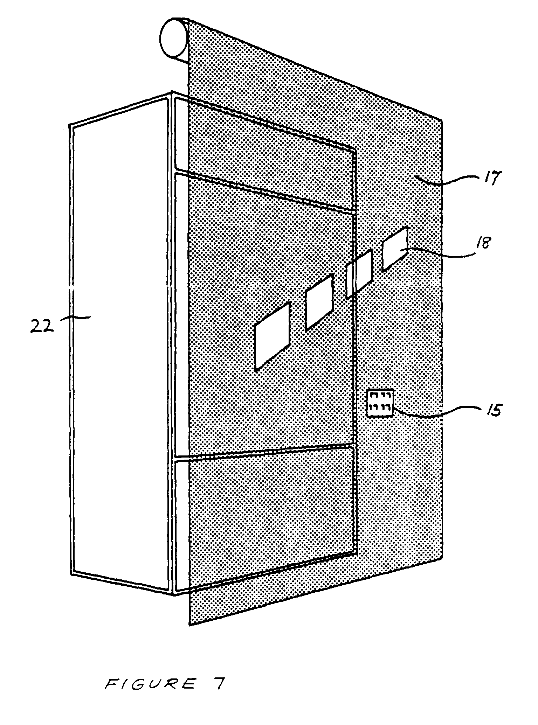

In some cases, depending on the intensity of the image display, the shop window may advantageously be provided with a blind 17 (see Figures 3 and 7) that includes viewing apertures 18, and the blind 17 may be operated automatically by an electric motor (not shown) in response to a photo-sensor (not shown) when ambient light levels would otherwise be too high to allow efficient viewing of an image on the screen 13 and/or of the LED's 16. The blind itself may carry a conventional static display. In some circumstances the blind may be activated during daylight hours to provide a static display but withdrawn when the light levels fall sufficiently (eg in the evening) to allow the projected image to be displayed.

In operation, the central control unit is programmed such as to cause the LED's to display a suitable message to attract passing potential customers, and to give them a menu or prompts such that they can readily operate the manual control 15 to activate the central control unit 14 to cause the projector 11A to select and display only pictures of properties meeting the users requirements and simultaneously to cause the LED display unit 16 to display details of the property and/or other relevant information called up by the potential customer or sequentially as pre-programmed in the central control unit 14.

It will be appreciated that the central control means 14 can, when required, control individually both the image displayed and the accompanying text so that the two can be controlled independently, eg if different text is to be displayed with a given image in different circumstances.

The central control unit 1 may be located with the apparatus but may, equally, be remote from the projector and connected thereto via a modem or other data communication channel.

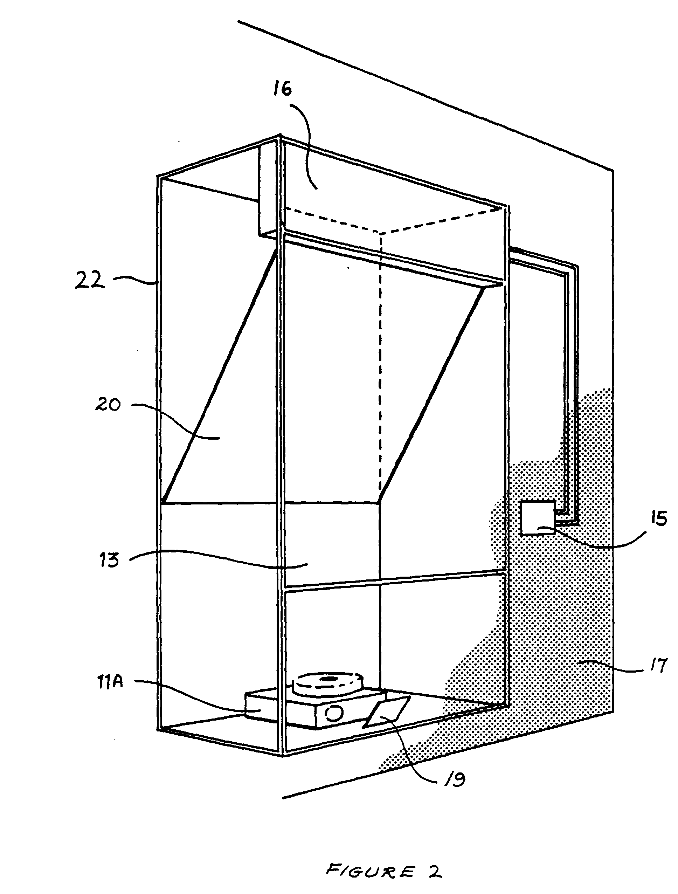

As shown in Figures 2 and 3, the projector 11A is preferably mounted in the base of an enclosure 22 which serves to contain the display apparatus and to prevent or reduce the level of ambient light falling on the rear of the screen 13. This is particularly important when a "high gain" screen 13 (see below) is used as such screens are of great optical efficiency and extraneous light would devalue the projected image. The apparatus also preferably comprises an optical system comprising at least one, first surface mirror for increasing the length of the optical path between the projector 11A and the screen 13 and thus increasing the size of the image formed thereon. In a preferred arrangement, as shown in Figures 2 and 3, a first mirror 19 is used to deflect light from the projector 11A in a substantially vertical direction and a larger, second mirror 20 is used to deflect the projected image onto the screen 13. Such an arrangement makes maximum use of the vertical dimension to enlarge the image whilst keeping the depth of the apparatus (ie the dimension perpendicular to the screen 13) to a minimum; the depth preferably being no more than 2m and preferably no more than 0.8m. Indeed, in some applications where the image is to be displayed at above head height, eg in an airport, the enclosure may be extended vertically to increase further the separation between the two mirrors 19 and 20 and thus enable an even larger image to be displayed.

The apparatus is designed at providing a display larger than that provided by a conventional visual display unit (VDU). The image provided on the screen is preferably at least 1m high x 1m wide and more preferably at least 1.5m wide x 2.0m high.

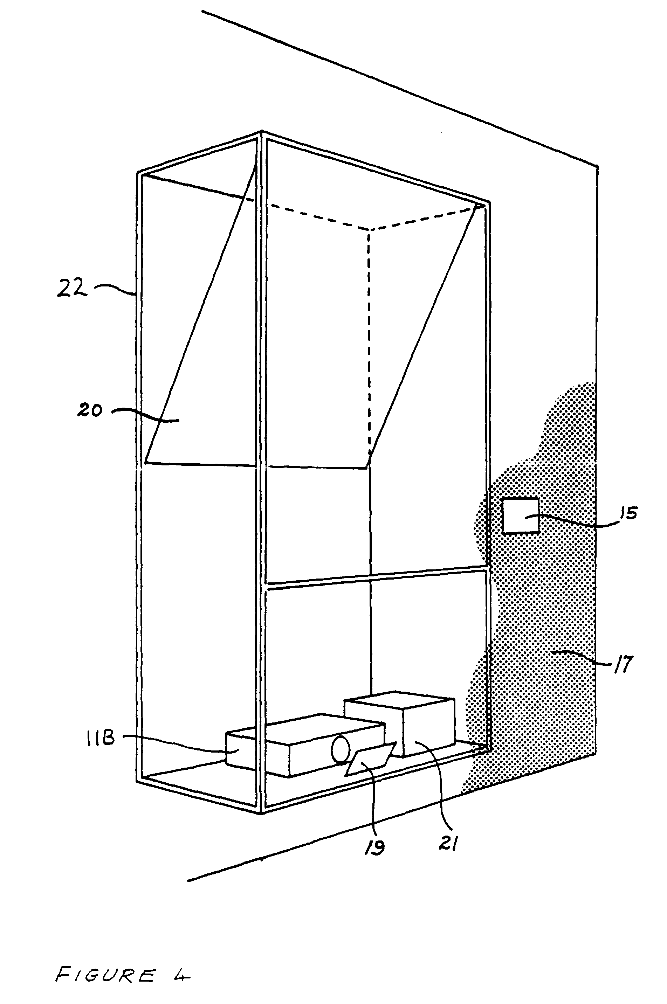

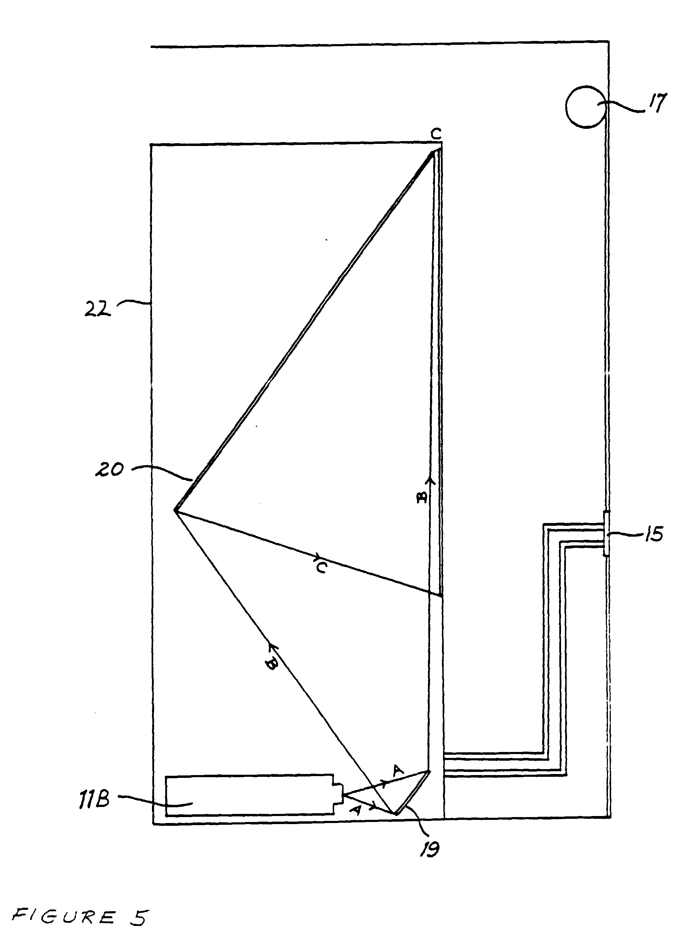

Figures 4 and 5 show an alternative example of display apparatus according to the invention in which the slide projector 11A is replaced by a video projector 11B, eg a liquid crystal video projector and the computer 14 is connected to an interactive CD (CD-i) 21 or similar multi-media CD player. In this case the textual display may be integrated with the visual display.

As shown in Figure 6, the enclosure 22 is preferably set back slightly from the shop window 23 so that a user operating the manual control 15 is at a comfortable viewing distance from the screen 13. The space between the enclosure 22 and shop window 23 can thus be used for the conventional static display of goods. However, in other situations, particularly where viewers would not be immediately adjacent the shop window, the screen 13 may be positioned nearer to or even adjacent the window 23.

It will be appreciated that the image displayed on the screen must be sufficiently bright to be seen in ordinary daylight. To this end it is highly desirable to enclose the apparatus in an enclosure as described above to reduce the level of ambient light falling on the back of the screen. In bright sunshine it may also be necessary to activate a blind as shown in Fiure 7 to reduce the amount of external light incident upon the screen. Such a blind may be operated automatically when the brightness of the external light reaches a given threshold. In addition to these measures, a high quality projector and high quality mirrors will help ensure that the maximum amount of light reaches the screen. The screen itself is also preferably of the "high gain" type which incorporates optical components (Fresnel lenses, a front lenticular layer and a prism structure) to reduce loss of light as it is transmitted through the screen.

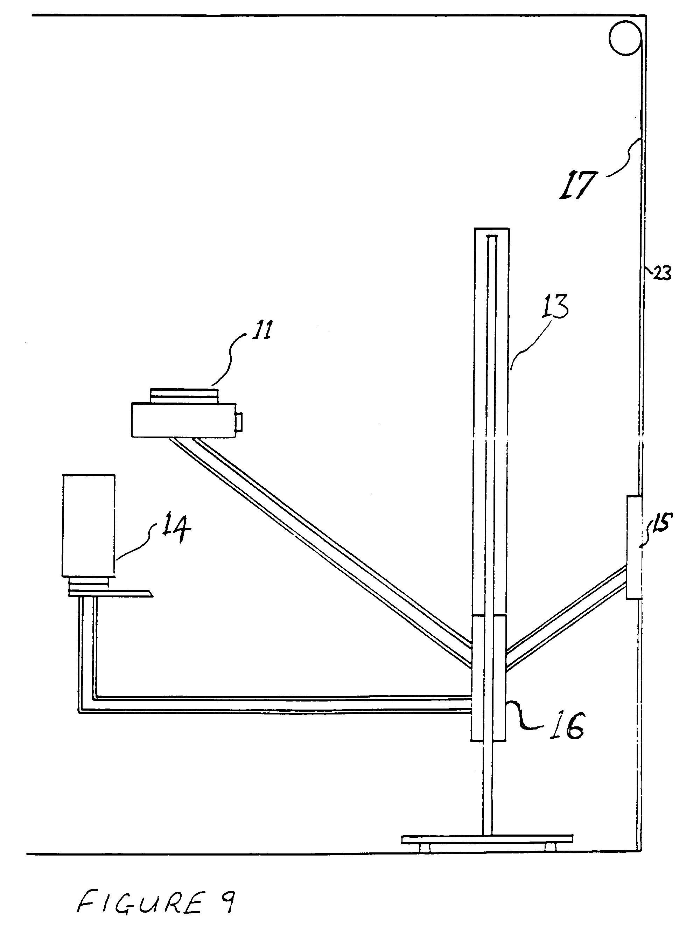

Figure 9 shows a further embodiment of the display apparatus. In this case, the projector 11 is mounted behind the screen 13 and projects an image directly on to the screen 13.

In addition to displaying a visual image and associated text, the apparatus described above and shown in any of the Figures may also be provided with audio means for providing an audio output, eg a message or music. This may be provided by any suitable form of audio recording device and loudspeaker system operated under the control of the central control unit and the manually operable control.

Other advantageous uses of a display apparatus according to the invention include the advertising of new and/or second hand cars where a customer can specify his requirements in terms of price range, type of vehicle, engine size, seating capacity and even colour, with the central processor selecting suitable alternatives and displaying these to the potential customer.

Other goods such as clothes may be displayed as they would appear in use, for example the visual images may show the clothes worn by fashion models.

Further such uses include the advertising and promotion of services such as, for example, travel agents displaying the various holidays available to meet a potential customer's requirements.

Such display apparatus according to the invention has a number of advantages over conventional shop window displays.

By using image based technology controlled by the potential customer the shop window becomes an active sales aid rather than being a mere passive display.

A large range of products and/or services may be displayed in succession, with small items enlarged for easy viewing, and high value items, such as for example, jewellery, may be displayed without the need for expensive security measures.

Moreover, in chains of shops or other outlets, programmes can be frequently updated without excessive costs because the same programme may be downloaded to each location and/or the location may be connected to a central control via a modem or other data communication link.

Moreover, the central processor by recording all enquiries made through the manually operable control 15 can provide a useful bank of information to assist market research.

The central processor can be pre-programmed to provide one or more messages for each image displayed. In some cases the central processor can be programmed to receive actual orders for goods or services in conjunction with, for example, a credit card swipe machine, or key pad for receiving credit card numbers.

Thus, for example, with each image the text may change a number of times allowing extensive information relating to the displayed visual image to be given.

The text display means may be used to display the same text in several languages simultaneously.

Additionally, in some cases, the text display means may advantageously be arranged such that with one textual display the text is constituted by, say, four lines of twenty one characters in order to give maximum information whilst another textual display relating to the same visual image may comprise only one line extending over the full height of the display thereby giving the text displayed increased visual impact.

Apparatus such as that described above may be used in a wide range of retail situations including advertising applications, eg on advertising "bill boards" or hoardings as well as in shop window displays.

## Claims

1. Retail display apparatus comprising: image display means and text display means arranged to display pre-recorded visual images and associated text, the image display means comprising a projector and a back projection screen; programmable central control means for controlling individually the image displayed by the image display means and the associated text displayed by the text display means; and manually operable remote control means connected to the central control means for enabling interactive operation of the apparatus by a user.

2. Retail display apparatus as claimed in Claim 1 in which the projector is a slide projector.

3. Retail display apparatus as claimed in Claim 1 or 2 in which the text display means comprises an alphanumeric LED display device for displaying text.

4. Retail display apparatus as claimed in claim 1 in which the projector is a video projector.

5. Retail display apparatus as claimed in Claim 4 in which the video projector is connected to an interactive memory device which stores information for the images and associated text available for display.

6. Retail display apparatus as claimed in any preceding claim in which the manually operable remote control means is operable through a sheet of glass.

7. Retail dispiay apparatus as claimed in any preceding claim in which the manually operable remote control means comprises a keypad or touch screen unit.

8. Retail display apparatus as claimed in the preceding claims located within a shop window so as to provide a display of visual images and associated text to people outside the shop.

9. Retail display apparatus as claimed in Claim 8 in which the shop window is provided with an automatic blind which is activated when the brightness of the external light reaches a given threshold, for reducing the light incident upon the screen.

10. Retail display apparatus as claimed in any preceding claim in which the image display means comprises an optical system comprising one or more mirrors for increasing the optical path length between the projector and the screen.

11. Retail display apparatus as claimed in Claim 10 in which light from the projector is deflected in a substantially vertical direction by a first mirror and then deflected by a second mirror onto the screen.

12. Retail display apparatus as claimed in any preceding claim in which the back projection screen is a "high-gain" screen, that is it includes opticai components to reduce loss of light transmitted therethrough.

13. Retail display apparatus as claimed in any preceding claim comprising an enclosure for housing at least the image display means to reduce the level of ambient light failing on the back of the screen.

14. Retail display apparatus as claimed in any preceding claim in which the screen has a width of at least 1m and a height of 1m, and preferably a width of at least 2.0m and a height of at least 1.5m.

15. Retail display apparatus as claimed in claim 4 which has a width which corresponds to the width of the screen and a depth, ie perpendicular to the screen, of no more than 2m and preferably no more than 0.8m.

16. A method of advertising products or services characterised in that the products or services are illustrated by pre-recorded images displayed by retail display apparatus as claimed in any of the preceding claims together with associated text such that the display may be interactively and selectively viewed by potential customers.

## Patentansprüche

1. Displaygerät für den Einzelhandel, umfassend: ein Bilddarstellmittel und ein Textdarstellmittel, die zur Darstellung von im voraus aufgenommenen visuellen Bildern und diesbezüglichem Text angeordnet sind, wobei das Bilddarstellmittel einen Projektor und eine Rückprojektionsbildwand umfaßt; ein programmierbares zentrales Steuermittel zwecks individueller Steuerung des durch das Bilddarstellmittel dargestellten Bildes und des durch das Textdarstellmittel dargestellten diesbezüglichen Textes; und ein von Hand bedienbares Fernsteuermittel, das mit dem zentralen Steuermittel verbunden ist, so daß es Dialogbetrieb des Geräts durch einen Benutzer ermöglicht.

2. Displaygerät für den Einzelhandel nach Anspruch 1, bei dem der Projektor ein Diaprojektor ist.

3. Displaygerät für den Einzelhandel nach Anspruch 1 oder Anspruch 2, bei dem das Textdarstellmittel eine alphanumerische LED-Darstellvorrichtung zum Darstellen von Text umfaßt.

4. Displaygerät für den Einzelhandel nach Anspruch 1, bei dem der Projektor ein Videoprojektor ist.

5. Displaygerät für den Einzelhandel nach Anspruch 4, bei dem der Videoprojektor mit einer Dialogspeichervorrichtung verbunden ist, die Daten hinsichtlich der zur Darstellung verfügbaren Bilder und diesbezüglichen Texte speichert.

6. Displaygerät für den Einzelhandel nach einem der vorstehenden Ansprüche, bei dem das von Hand bedienbare Fernsteuermittel durch eine Glasscheibe hindurch bedient werden kann.

7. Displaygerät für den Einzelhandel nach einem der vorstehenden Ansprüche, bei dem das von Hand bedienbare Fernsteuermittel eine Kleintastatur oder einen Bildschirm mit Berührungseingabe umfaßt.

8. Displaygerät für den Einzelhandel nach einem der vorstehenden Ansprüche, das zwecks Darstellung visueller Bilder und diesbezüglichen Textes für außerhalb des Ladens befindliche Personen innerhalb eines Ladenfensters angeordnet wird.

9. Displaygerät für den Einzelhandel nach Anspruch 8, bei dem das Ladenfenster mit einer automatischen Abblendvorrichtung versehen ist, die betätigt wird, wenn die Helligkeit des Außenlichtes einen gewissen Schwellwert erreicht, um die Stärke des auf die Bildwand auffallenden Lichtes einzuschränken.

10. Displaygerät für den Einzelhandel nach einem der vorstehenden Ansprüche, bei dem das Bilddarstellmittel ein optisches System umfaßt, das einen oder mehrere Spiegel zum Verlängern des Lichtweges zwischen dem Projektor und der Bildwand aufweist.

11. Displaygerät für den Einzelhandel nach Anspruch 10, bei dem von dem Projektor ausgehendes Licht durch einen ersten Spiegel in einer im wesentlichen senkrechten Richtung abgelenkt wird und dann durch einen zweiten Spiegel auf die Bildwand abgelenkt wird.

12. Displaygerät für den Einzelhandel nach einem der vorstehenden Ansprüche, bei dem der Rückprojektionsbildwand eine Bildwand "mit hoher Bildhelligkeit" ist, d.h. eine Bildwand, die optische Komponenten umfaßt, welche die Aufgabe haben, Verlust des durch die besagte Bildwand hindurch übertragenen Lichtes einzuschränken.

13. Displaygerät für den Einzelhandel nach einem der vorstehenden Ansprüche, umfassend ein Gehäuse zur Unterbringung von mindestens dem Bilddarstellmittel, um die Stärke des auf die Rückseite des Bildschirms auffallenden Umgebungslichtes einzuschränken.

14. Displaygerät für den Einzelhandel nach einem der vorstehenden Ansprüche, bei dem der Bildschirm eine Breite von mindestens 1 m und eine Höhe von 1 m vorzugsweise jedoch eine Breite von mindestens 2,0 m und eine Höhe von mindestens 1,5 m aufweist.

15. Displaygerät für den Einzelhandel nach Anspruch 4, dessen Breite der Bildwandbreite entspricht, und das eine Tiefe, d.h. ein Maß senkrecht zu dem Bildschirm, von nicht mehr als 2 m und vorzugsweise nicht mehr als 0,8 m aufweist.

16. Eine Methode zum Werben für Produkte oder Dienstleistungen, dadurch gekennzeichnet, daß die Produkte bzw. Dienstleistungen durch im voraus aufgenommene mit Hilfe des Displaygeräts für den Einzelhandel nach einem der vorstehenden Ansprüche dargestellte Bilder gemeinsam mit diesbezüglichem Text veranschaulicht werden, wobei die besagte Methode so beschaffen ist, daß die Darstellung durch potentielle Kunden im Dialogverkehr und selektiv betrachtet werden kann.

## Revendications

1. Appareil d'affichage pour point de vente comprenant : un moyen d'affichage de l'image et un moyen d'affichage du texte agencés pour afficher des images visuelles pré-enregistrées et un texte connexe, le moyen d'affichage de l'image comprenant un projecteur et un écran de rétro-projection; un moyen de commande central programmable pour commander individuellement l'image affichée par le moyen d'affichage de l'image et le texte connexe affiché par le moyen d'affichage du texte; et un moyen de télécommande manuel relié au moyen de commande central pour permettre l'exploitation interactive de l'appareil par un utilisateur.

2. Appareil d'affichage pour point de vente selon la Revendication 1 dans lequel le projecteur est un projecteur de dispositives.

3. Appareil d'affichage pour point de vente selon la Revendication 1 ou 2 dans lequel le moyen d'affichage du texte comprend un dispositif d'affichage alphanumérique à diodes LED pour afficher le texte.

4. Appareil d'affichage pour point de vente selon la revendication 1 dans lequel le projecteur est un projecteur vidéo.

5. Appareil d'affichage pour point de vente selon la Revendication 4 dans lequel le projecteur vidéo est connecté à un dispositif à mémoire interactif qui mémorise des informations pour les images et le texte connexe disponibles pour l'affichage.

6. Appareil d'affichage pour point de vente selon l'une quelconque des revendications précédentes dans lequel le moyen de télécommande manuel peut être commandé à travers une vitre.

7. Appareil d'affichage pour point de vente selon l'une quelconque des revendications précédentes dans lequel le moyen de télécommande manuel comprend un clavier ou un écran tactile.

8. Appareil d'affichage pour point de vente selon l'une quelconque des revendications précédentes situé dans une vitrine de magasin de manière à fournir un affichage d'images visuelles et de texte connexe aux personnes situées à l'extérieur du magasin.

9. Appareil d'affichage pour point de vente selon la Revendication 8 dans lequel la vitrine est munie d'un store automatique qui est activé lorsque l'intensité de la lumière extérieure atteint un seuil donné, afin de réduire la lumière incidente sur l'écran.

10. Appareil d'affichage pour point de vente selon l'une quelconque des revendications précédentes dans lequel le moyen d'affichage de l'image comprend un système optique comportant un ou plusieurs miroirs pour augmenter la longueur du chemin optique entre le projecteur et l'écran.

11. Appareil d'affichage pour point de vente selon la Revendication 10 dans lequel la lumière émise par le projecteur est déviée dans une direction essentiellement verticale par un premier miroir puis déviée sur l'écran par un deuxième miroir.

12. Appareil d'affichage pour point de vente selon l'une quelconque des revendications précédentes dans lequel l'écran de rétro-projection est un écran à gain élevé, c'est-à-dire qu'il comporte des composants optiques pour réduire la perte de lumière transmise à travers lui.

13. Appareil d'affichage pour point de vente selon l'une quelconque des revendications précédentes comprenant une enceinte pour contenir au moins le moyen d'affichage de l'image afin de réduire le niveau de lumière ambiante atteignant l'arrière de l'écran.

14. Appareil d'affichage pour point de vente selon l'une quelconque des revendications précédentes dans lequel l'écran a une largeur d'au moins 1 m et une hauteur de 1 m, et de préférence une largeur d'au moins 2,0 m et une hauteur d'au moins 1,5 m.

15. Appareil d'affichage pour point de vente selon la revendication 4, qui a une largeur correspondant à la largeur de l'écran et une profondeur, c à d. la perpendiculaire à l'écran, de 2 m maximum et de préférence de 0,8 m maximum.

16. Méthode de publicité pour produits ou services caractérisée en ce que les produits ou services sont illustrés par des images pré-enregistrées affichées par un appareil d'affichage pour point de vente selon l'une quelconque des revendications précédentes conjointement avec un texte connexe de telle sorte que l'affichage peut être visualisé de manière interactive et sélective par les clients potentiels.
